# EUROPEAN PATENT SPECIFICATION

(11) **EP 2 938 126 B1**
(45) Date of publication and mention of the grant of the patent: **09.08.2017**
(21) Application number: 14290120.6
(22) Date of filing: 25.04.2014
(51) Int. Cl.: H04W 36/00

(54) **Base station and method of operating a base station**
Basisstation und Verfahren zum Betreiben einer Basisstation
Station de base et son procédé de fonctionnement

(43) Date of publication of application: 28.10.2015
(73) Proprietor: ALCATEL LUCENT, 92100 Boulogne-Billancourt (FR)
(72) Inventor: Bakker, Hajo, 70435 Stuttgart (DE); Klein, Siegfried, 70435 Stuttgart (DE); Barth, Ulrich, 70435 Stuttgart (DE); Weber, Andreas, 70435 Stuttgart (DE)
(74) Representative: Wetzel, Emmanuelle

(56) References cited:
- EP-A1- 2 688 338
- WO-A1-2011/053534

## Description

### Specification

### Field of the invention

The invention relates to a base station for a cellular communications network and to a method of operating a base station for a cellular communications network.

### Background

Conventional base stations for cellular communications networks usually control parameters of terminals served by said base stations depending on standardized procedures and/or a category of the terminals ("UE category"), which e.g. reflects the terminals' capabilities regarding one or more versions of the underlying standard. For instance, in the context of LTE (Long Term Evolution) communications networks, or LTE-A (LTE-Advanced) communications networks, the UE category indicates maximum data rates or MIMO (Multiple Input Multiple Output) mode configurations supported by respective devices.

EP 2 688 338 A1 discloses a mobile transceiver and a base station transceiver.

WO 2011/053534 A1 discloses determination of handover parameters by an access point.

Nevertheless, terminals of a same UE category may behave differently at least in some operational states such as e.g. handover procedures, especially within HetNet (Heterogeneous Network) configurations, where e.g. a number of smaller pico cells is arranged within a larger macro cell and handovers between the pico and macro cell occur. This may e.g. lead to suboptimal distribution of terminals between macro cell base stations and pico cell base stations.

### Summary

In view of this, it is an object of the present invention to provide an improved base station and method of operating a base station which avoid the aforementioned disadvantages.

According to the present invention, regarding the base station, this object is achieved by the feature combination of claim 1.

Thus, although various terminals which are served by the base station may adhere to the same UE category, individual differences regarding the specific implementation of the radio frequency (RF) receiver of the respective terminals may be taken into consideration when assigning the handover bias value which controls a handover procedure the terminal may be involved in. This advantageously enables to more precisely control handover processes especially in HetNet configurations where various pico cells are arranged within a larger macro cell. Particularly, the principle according to the embodiments advantageously enables to economically distribute the various terminals of the HetNet scenario between the macro cell and the pico cells, depending on their individual RF receiver capabilities.

The principle according to the embodiments is particularly suitable for cellular communications networks and base stations thereof, which adhere to the LTE (Long Term Evolution) standard or the LTE-A (LTE Advanced) standard. However, the principle according to the embodiments is not limited to LTE or LTE-A systems, but may also be applied to other cellular communications networks where a handover bias value may be provided to control a handover mechanism of terminals.

Nevertheless, for the sake of simplicity, the further exemplary descriptions will focus on LTE or LTE-A base stations.

According to a preferred embodiment, the handover bias value assigned by the base station may e.g. be the parameter "cellIndividualOffset" as explained in 3GPP (Third Generation Partnership Project) TS 36.331 V8.20.0 (2013-06) in chapter 5.5.4.4. This advantageously enables to directly influence the handover behavior of individual terminals according to the principle of the embodiments.

Advantageously, the base station is configured to determine said RF receiver quality parameter depending on a connection reestablishment request received from said terminal. Usually, a terminal may issue a connection reestablishment request to a base station after a radio link failure (RLF). According to Applicant's analysis, such radio link failures may inter alia be caused by properties of the terminal which relate to the RF receiver quality parameter in the sense of the embodiments. For example, when considering a HetNet scenario with a macro cell and a smaller pico cell arranged in the coverage area of the macro cell, enhanced inter-cell interference coordination (eICIC) measures may be taken such as e.g. applying the principle of almost blank subframes (ABS). The ABS technique requires the macro base station (i.e. base station serving the macro cell) to not use specific subframes, namely the almost blank subframes, for data transmissions in the downlink direction. Rather, these almost blank subframes are intentionally left unused to a high degree (pilot and/or control signals may still be sent by the macro base station in the almost blank subframes) from the macro base station side in order to enable the pico base station (i.e. the base station serving the pico cell arranged in the macro cell) to perform data transmissions with its associated terminals. Otherwise, there is a high risk that the transmissions from the pico base station cannot be properly detected by the UEs served by the pico base station since the macro base station's transmissions usually have a higher transmission power and thus represent substantial interference to pico cell transmissions.

A further aspect of the ABS technique is the fact that although the macro cell applying the ABS technique does not transmit downlink data during the almost blank subframes in principle, pilot signals and control signaling is still transmitted in the downlink direction by the macro cell base station during the "almost blank subframes". In other words, the almost blank subframes are not completely free from downlink transmissions of the macro base station but may rather comprise pilot signals and control signaling. Nevertheless, the pico base station of the HetNet scenario uses said almost blank subframes for data transmissions to its terminals. In this constellation, a first group of terminals served by the pico base station may e.g. be able to fully recover downlink transmissions of the pico base station even though the almost blank subframes comprise pilot and control signals transmissions from the macro base station, while a further group of terminals served by the pico base station may not be capable of recovering the pico base stations downlink transmissions due to e.g. an inferior RF receiver comprised therein. In other words, individual or implementation-based details of the RF receivers of the terminals associated with the pico base station may influence whether the terminals are capable of recovering data from the pico base station during the almost blank subframes, while other terminals may not be capable of recovering such data.

Those terminals which comprise inferior RF receivers thus usually have a higher risk of experiencing radio link failures due to macro cell transmissions during the almost blank subframes. This is one aspect where the principle according to the embodiments provides its advantages in that especially the terminals with less capable RF receivers can be assigned an individual handover bias value, i.e. some other handover bias value as e.g. provided according to the LTE standard or according to a specific implementation. Usually, with conventional systems, the handover bias value will e.g. be provided on a per-cell-basis, i.e. the same handover bias value applies to all terminals served by a specific cell. However, applying the principle according to the embodiments, even individual terminals may e.g. provided with individual handover bias values thus being able to address the aforementioned problems of different quality/capabilities of RF receivers.

According to an embodiment, the handover bias value may e.g. influence a cell range of e.g. a pico cell arranged within a macro cell. For terminals with comparatively capable RF receivers, a comparatively large value for the handover bias may be chosen, because these terminals will be able to properly decode data transmissions from their pico base station even if experiencing interference from a macro base station transmitting in e.g. the almost blank subframes. For other terminals, which do not comprise such capable RF transceivers, smaller or even zero bias values may be assigned by the base station according to the embodiments, which leads to an earlier handover when the terminal moves from the pico base station to the macro base station.

Altogether, by applying the principle according to the embodiments, a very efficient distribution of terminals to pico cells and macro cells is enabled which takes into account not only a UE category, but rather also terminal-specific details such as the capability of the RF receiver.

Coming back to the present embodiment, when a base station according to the embodiments receives a connection reestablishment request from a specific terminal, the base station may conclude that this terminal comprises a less capable RF transceiver since a radio link failure has occurred, which has led to the connection reestablishment request.

According to an embodiment, the RF receiver quality parameter may be a binary parameter, i.e. comprising two possible values, wherein the first value (e.g., "0") may indicate a less capable RF receiver, and wherein the second value (e.g., "1") may indicate a more sophisticated RF receiver.

According to a further embodiment, for terminals for which no radio link failure or a corresponding connection reestablishment request has been detected by the base station, there is no requirement for assigning a terminal-specific handover bias value.

According to a further embodiment, said base station is configured to determine said RF receiver quality parameter based on a reestablishment cause value of said connection reestablishment request. The reestablishment request of LTE systems may comprise a data field termed "reestablishment cause", which may assume different values to indicate the reason for a reestablishment request of a terminal. Thus, a more precise assessment whether possibly a terminal with a less capable RF transceiver is present can be performed by the base station.

According to a further embodiment, the base station is configured to determine said RF receiver quality parameter based on whether a user equipment context for said terminal is available at the time said connection reestablishment request is received. If so, this is an indication for a previously ongoing handover procedure of said terminal from another base station to the base station according to the embodiment, because the user equipment context for the terminal in question is already available at the base station. Hence, in this case, the base station can detect that the terminal enters its cell by means of the reestablishment procedure, and not by means of the reconfiguration procedure. Thus, the base station according to the present embodiment can identify that a radio link failure has occurred in a cell the terminal has been assigned to prior to initiating the mentioned handover procedure.

According to a further embodiment, the base station is configured to determine said RF receiver quality parameter based on information obtained by an external device, preferably another base station. Thus, instead of inferring or determining the RF receiver quality parameter itself, e.g. on the basis of monitored terminal behavior, the base station according to the present embodiment may receive corresponding information from another base station, e.g. a neighboring base station, preferably by means of an X2 interface.

According to a further embodiment, the base station is configured to transmit said RF receiver quality parameter and/or said individual handover bias value to at least one further device, preferably a further base station, whereby the further base station may be enabled to apply the principle according to the embodiments, i.e. the assigning of individual handover bias values to specific terminals.

According to an embodiment, the base station may choose to include the "unspecified" cause within an X2 handover request to the further base station. In this case, by such convention, the further base station can be notified by the fact that the terminal associated with the respective handover request comprising the unspecified cause is considered to comprise a less capable RF receiver, i.e. a specific RF receiver quality parameter. This embodiment is e.g. beneficial for implementing a vendor-specific implementation, wherein all base stations of the same source or vendor, respectively, are aware of the fact of using the specific value of the "unspecified" cause within the X2 handover request means that the associated terminal comprises a less capable RF receiver.

According to a further embodiment, an additional information element may also be integrated into an X2 handover request and/or another X2 message, whereby information on the RF receiver quality parameter may advantageously be exchanged between base stations.

According to a further embodiment, said individual handover bias value is lower than a default handover bias value used by default within a cell provided by said base station. The mentioned default value may e.g. be provided by a corresponding communications standard or by choice of implementation and is usually chosen on a per-cell-basis by conventional systems. Choosing or assigning an individual handover bias value which is lower then said default handover bias value has the effect that the respective terminal assigned with this individual handover bias value may perform a handover procedure earlier than other terminals for which the standard or default handover bias value is applicable.

A further solution to the object of the present invention is provided by a method according to claim 7. Further advantageous embodiments are presented by the dependent claims.

### Brief description of the figures

Further features, aspects and advantages of the present invention are given in the following detailed description with reference to the drawings in which:
- Figure 1: schematically depicts a base station according to an embodiment, and
- Figure 2: schematically depicts a simplified flow chart of a method of operating a base station according to an embodiment.

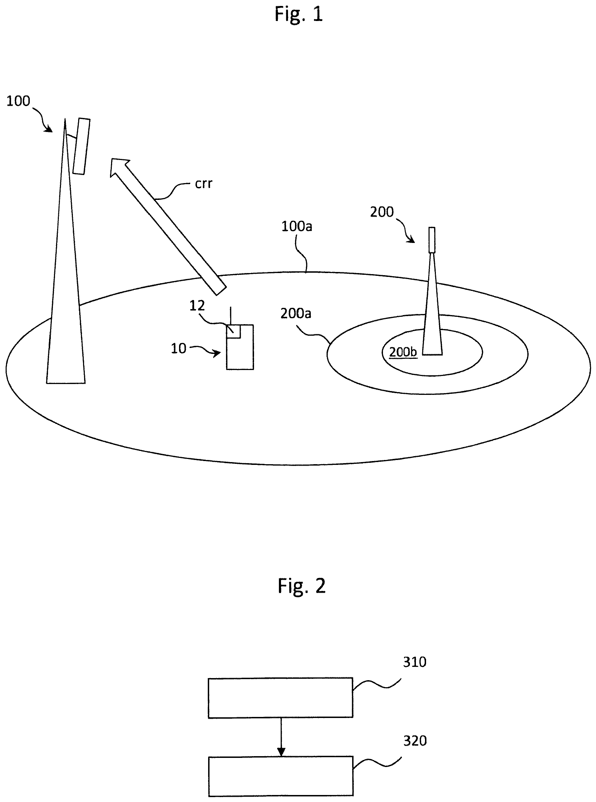

Figure 1 schematically depicts a base station 100 according to an embodiment. The base station 100 may in a per se known manner serve one or more terminals 10 which are present in a radio coverage area also denoted as radio cell which is indicated in figure 1 by reference numeral 100a. Also depicted in figure 1 is a further base station 200 which provides for a comparatively small coverage area 200a, 200b within said cell 100a having an outer section 200a and an inner section 200b.

The scenario depicted by figure 1 may also be referred to a HetNet scenario because the cell of the base station 100 may be considered as a macro cell 100a in which there is arranged a pico cell 200a, 200b maintained by the pico base station 200.

According to some operational scenarios, a terminal 10 may e.g. change from the macro cell 100a to the pico cell 200a or vice versa by means of handover procedures well known in the art.

According to the principle of the embodiments, the base station 100 is configured to determine for at least one terminal 10 an RF receiver quality parameter that characterizes a performance of a radio frequency receiver 12 of the terminal 10, and to assign to said at least one terminal 10 an individual handover bias value depending on said RF receiver quality parameter. Thereby, a terminal-specific fine tuning of the handover procedure may be attained which takes into account the actual capability of the respective RF receiver 12 of the terminal 10.

Particularly, in contrast to conventional systems, which are based on distinguishing terminals on a per-UE-category basis, a more precise configuration resulting in more efficient handover procedures and distribution of terminals between macro cells 100a and pico cells 200a can be attained.

According to an embodiment, the base station 100 is configured to determine said RF receiver quality parameter depending on a connection re-establishment request CRR received from said terminal 10. I.e., according to an embodiment, base station 100 may conclude from receiving said radio reestablishment request CRR that the terminal 10 which has issued said request CRR comprises a less capable RF receiver 12, which may e.g. be the case for low-cost prepaid UEs in contrast to high-end smart phones with more sophisticated RF receivers 12.

According to an embodiment, the RF receiver quality parameter may be a binary parameter, i.e. comprising two values, wherein the first value may indicate a less capable RF receiver 12, and the second value may indicate a more sophisticated RF receiver. Depending on the specific value of the RF receiver quality parameter, a corresponding terminal 10 may be able to properly decode data transmissions from its base station 200 in HetNet scenarios with eICIC mechanisms such as almost blank subframes.

It is to be noted that the principle according to the embodiments may be equally applied either by the macro base station 100 or the pico base station 200, or any other base station of the cellular communications network.

According to a further embodiment, the base station 100 is configured to determine said RF receiver quality parameter based on a "reestablishment cause" value of said connection reestablishment request CRR. According to an embodiment, especially for terminals adhering to the LTE standard in a release lower than release 10, e.g. LTE release 8, the terminal 10 may indicate to its base station 100 by means of the reestablishment cause value of the corresponding connection reestablishment request CRR that a radio link failure (RLF) has occurred. From this, the base station 100 according to the embodiments may conclude that the terminal comprises e.g. a less capable RF transceiver which caused the RLF.

According to a further embodiment, the base station 100 is configured to determine said RF receiver quality parameter based on whether a user equipment context for said terminal 10 is available for a time said connection reestablishment request CRR is received. If so, this is an indication for a previously ongoing handover procedure of said terminal 10 from another base station 200 to the base station 100 according to the embodiment, because the user equipment context for the terminal 10 in question is already available at the base station 100. Hence, in this case, the base station 100 can detect that the terminal 10 enters its cell 100a by means of the reestablishment procedure, and not by means of a reconfiguration procedure. Thus, the base station 100 according to the present embodiment can identify that a radio link failure has occurred in a cell 200a the terminal 10 has been assigned to prior to initiating the mentioned handover procedure.

According to yet another embodiment, the base station 100 is configured to determine said RF receiver quality parameter based on information obtained by an external device, preferably another base station 200. For instance, base station 200 of figure 1 may also be enabled to perform the principle according to the embodiments. In this case, the base station 200 may have determined for terminal 10 a corresponding value of the RF receiver quality parameter and may have transmitted said value to its macro base station 100, e.g. by using an X2 interface (not shown). For example, an X2 handover request may be used for conveying said information, e.g. indicating an "unspecified cause" for the X2 handover request. For the HetNet scenario defined by figure 1 and the involved base stations 100, 200, a convention may be defined that said "unspecified" cause value indicates that a corresponding terminal comprises a less capable RF receiver 12.

According to a further embodiment, an additional information element may be included in e.g. the X2 handover request or in any other X2 message which may be exchanged between the base stations 200, 100 to enable base station 200 to notify its neighbour base stations or its associated macro cell base station 100 of a specific RF receiver quality parameter of one or more of its terminals.

Figure 2 schematically depicts a simplified flow chart of a method of operating base station 100, 200 according to an embodiment. In step 310, the base station 100, 200 determines said RF receiver quality parameter of the terminal 10. In step 320, the base station 100, 200 assigns to said terminal 10 an individual handover bias value depending on said previously determined RF receiver quality parameter. This individual handover bias value will e.g. control the future handover behavior of the terminal 10. For example, a relative cell size of the cells 100a, 200a may thus be controlled on a terminal-specific basis, because the individual handover bias value influences when a handover is performed for terminals moving between the base stations 100, 200.

According to a preferred embodiment, for less capable terminals or RF receivers, respectively, usually, the individual handover bias value which is assigned within step 320 according to the flow chart of figure 2, may be chosen lower than a default handover bias value which may be used within the cell 100a by the base station 100 by default for any other terminal.

According to a further embodiment, terminal 10 may e.g. be roaming within the inner section 200b of the pico cell of pico base station 200. The pico base station 200 may either already be aware of the RF receiver's capability of the terminal 10, either by previously having performed a method according to the embodiments or having received corresponding information from another base station such as e.g. macro base station 100. If it has been determined that the terminal 10 comprises a comparatively capable RF receiver 12, it may be assigned with the default handover bias value used for all other terminals. In this case, when moving from the pico cell of base station 200 to the cell of macro base station 100, the terminal 10 would perform a handover process, i.e. change to base station 100, only when leaving the outer section 200a of the pico cell.

However, considering a case wherein the terminal 10 would be equipped with a less capable RF receiver 12, the pico base station 200 would have assigned a lower individual handover bias value to the terminal 10 according to an embodiment. This would lead to a handover when the terminal is moving from the inner section 200b towards base station 100 at an earlier point in time, e.g. when terminal 10 leaves the inner section 200b and enters the outer section 200a of the pico cell. In other words, using the individually assigned handover bias value in this case enables to perform a rather early handover for the terminal with a less capable RF receiver thus avoiding a radio link failure which would e.g. take place if the terminal with its less capable RF receiver would roam around the pico cell boarder in section 200a.

According to a further embodiment, a pico/metro cell 200 may alter a handover bias value for its terminals to "catch" - as many as possible - terminals from the macro cell 100a by increasing the bias value, i.e. it offloads traffic from the macro cell 100a. The handover bias value is one out of several handover configuration parameters. Based on a modified bias value - according to the principle of the embodiments - a terminal 10 might request a handover to a new serving cell, which is carried out - compared to an old or default bias value - earlier or later.

According to a further embodiment, a large handover bias value leads to an expanded cell coverage of the pico/metro cell 200a as a terminal 10 in the direction from the macro cell 100a towards the pico cell 200a will carry out a handover earlier compared to the standard handover procedure. According to a further embodiment, a terminal 10 moving from the pico/metro cell 200a towards the macro cell area 100a will carry out the handover later than compared to the optimal radio conditions, also based on the handover bias value. Exemplarily, the handover relies on a comparison of the received signal strengths, i.e. RSRP values of serving and target radio cell 100a, 200a and does not take into account the Signal to Interference plus Noise Ratio (SINR).

According to an embodiment, a footprint (coverage area) of a pico cell does not only depend on the handover bias value. If a first pico cell (not shown) is deployed near to a cell edge of a first macro cell 100a (Fig. 1), its footprint will be larger compared to a second pico cell which is located near to an antenna of the first macro cell 100a. According to an example, the allocation of terminals to cells is based on comparison of the received signal strength from the macro and the pico cell, i.e. based on RSRP values. Terminals served by the first pico cell within a very large expanded cell area will suffer interference from the first macro cell, but also interference from direct neighbor macro cells (not shown). As a result, depending on the handover bias value and the number of pico cells per macro cell there may be very low SINR values at some locations within the radio cell. According to an embodiment, for terminals 10 equipped with low performance RF receivers 12 these low SINR values will yield to decoding problems of the Physical Downlink Control Channel (PDCCH), resulting in missing uplink traffic, missing HARQ acknowledgements of downlink traffic, low CQI values or even radio link failures (RLF). Especially for stationary terminals, permanently located within this low SINR area, a user experience will be quite worse.

In view of this, the principle according to the embodiments proposes the aforementioned solution which has been explained with reference to Fig. 1, 2. According to an embodiment, pico cell terminals 10 with low performance RF receivers 12 are identified by the pico cell 200 based on worse radio conditions or after a re-attachment to the macro cell 100a. If such a terminal 10 is identified it will be configured with an individual handover bias value which is preferably lower than a current bias value to avoid an too early handover from the macro cell 100a towards the pico cell 200a if the terminal 10 moves back to the pico cell 200a. In addition, according to a further embodiment, a new information element within an X2 handover request may be used to indicate to other cells (pico/macro) that this terminal 10 was identified as "low performance UE" and none or a reduced bias value should be configured.

In the following, further advantageous embodiments are explained. For the identification of a "low performance UE" and the re-attachment to the macro cell 100a different scenarios are exemplarily explained.

### Scenario A.

A RLF in pico cell 200a without detection of radio problems in the pico cell. The low performance UE (i.e., terminal 10) suffers a radio link failure (RLF) in the pico cell 200a, prior to detection of the radio problems by the pico cell. The UE 10 will start a reestablishment in the macro cell 100a, which will fail as no UE context is available in the macro cell 100a. The UE 10 enters the idle state and will setup a new connection within in macro cell 100a. The macro cell 100a, or its base station 100, respectively, can identify that a RLF occurred in the pico cell. This is done for pre-Rel. 10 of the 3GPP standard UEs by analyzing the reestablishment cause value or analyzing the reestablishment cause within the RLF report from Rel 10 onwards.

### Scenario B.

New handover bias value or forced handover by the pico cell 200a, RLF in the pico cell. The pico cell 200a detects the radio problems and reconfigures the low performance UE 10 with a lower handover bias value. Based on the lower handover bias value the UE 10 will send out a measurement report to the pico cell 200a, which indicates that a handover to the macro cell 100a should be carried out. After the reception of the measurement report the pico cell 200a will transmit a handover request via the X2 interface to the macro cell 100a or its base station 100. Within an embodiment the pico cell 200a will not reconfigure the UE 10, instead the X2 handover request is transmitted as soon as radio problems have been detected, i.e. the pico cell 200a carries out a forced handover. If the macro cell accepts 100a the handover request the pico cell 200a will send out the handover command to the low performance UE 10.

The UE 10 might suffer a RLF before the handover command from the pico cell 200a to the UE 10 is transmitted or might suffer a RLF if the handover command cannot be decoded. UE 10 will be able to reestablish the connection at the macro cell 100a without going to idle as the UE context is available within the macro cell 100a. As the UE 10 enters the macro cell 100a with the reestablishment procedure and not with the reconfiguration procedure, the macro cell 100a can identify that an RLF within the pico cell 200a occurred.

### Scenario C.

New bias value or forced handover from the pico cell 200a, without RLF in the pico cell 200a.
The pico cell 200a sends out a handover request towards the macro cell 100a, based on UE measurement or based on a forced handover (see scenario B). If the macro cell 100a accepts the handover request the pico cell 200a will send out the handover command to the low performance UE 10. After decoding of the handover command the UE 10 will start the reconfiguration procedure towards the macro cell 100a. As a standard handover has been carried out the macro cell 100a may not be able to distinguish between a UE entering the macro cell 100a with the default bias or a low performance UE entering the macro cell 100a with a reduced bias value or based on a forced handover. In the following, two aspects according to the embodiments are described that support the detection of a low performance UE in this case.

A UE 10 which attached the macro cell after RLF (scenario A and B) is defined as a low performance UE and is configured with a reduced handover bias value, or even a zero bias value as standard handover value is applied.

An immediate detection as a low performance UE by the macro cell based on a standard handover procedure (scenario C) is not possible, as the current 3GPP standardization does not support a transfer of UE-specific information on the X2 interface. If the pico cell 200a has forced the low performance UE to carry out the handover or a reduced bias value, e.g. -4dB was applied for the handover to the macro cell, a ping pong handover situation may occur. The macro cell 100a may apply the standard bias (e.g. -6dB) to the UE 10 and the UE 10 may immediately request a handover back to the pico cell 200a. The next attachment of the low performance UE 10 will follow the scenarios A to C, see above.

According to an embodiment, to avoid a continuously ongoing ping pong handover scenario between two base stations 100, 200, two aspects according to the embodiments can be applied:
Aspect 1: The pico cell 200a may include the 'unspecified' cause within an X2 handover request towards the macro cell 100a. Within a vendor specific implementation (e.g. macro and pico from the same manufacturer) this cause value is identified by the macro cell 100a to apply no bias value (or a reduced handover bias value) for this specific UE. The same cause is applied by the macro cell 100a if the UE 10 moves back from the macro cell 100a towards the pico cell 200a.
Aspect 2: After a minimum number of ping pong handovers (e.g. 2 times) occurred, the macro cell 100a will detect the ping pong scenario by analyzing the UE history information which is transmitted via each handover request via the X2 interface. Within this information the last visited cells 100a, 200a and the time the UE 10 stayed within these cells are included, which enables an easy detection of the ping pong situation. After detection of the ping pong handover, the macro cell 100a will configure the UE 10 without a handover bias value (or with a reduced handover bias value).

To avoid the ping pong scenario, according to an aspect of the embodiments, it is proposed an addition to the X2 handover request message, e.g. an additional information element. Within the information element the pico cell indicates that this handover is carried out for a low performance UE 10. The macro cell 100a will configure the UE 10 without the default bias value (or with a reduced handover bias value) and will also include this additional information element if the UE 10 will carry out a handover back to the pico cell 200a. This is beneficial, as the UE context may be deleted after a successful handover, i.e. the pico cell 200a would otherwise not detect that a low performance UE 10 which was previously already served is again entering the cell.

In the case several pico cells are deployed within the footprint of the macro cell 100a, there might be a further handover from the macro cell 100a towards a second pico cell (not shown). Also in this case the macro cell 100a might inform the second pico cell that a low performance UE will carry out a handover. This enables the second pico cell to configure the UE 10 with a lower bias value compared to the default value.

According to an embodiment, within this additional information element the applied bias or handover value might be included.

As the radio situation within other macro cells (not shown) might differ, e.g. a second macro cell without a pico cell, according to a further embodiment, the additional information element might be valid only for a limited time and/or only valid for the macro/pico relationship, i.e. if the macro cell request for this low performance UE a handover to a second macro cell the additional information element may be empty/not applied.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Base station (100) for a cellular communications network, wherein the base station (100) is configured to determine for at least one terminal (10) an RF receiver quality parameter that characterizes a performance of a radio frequency receiver (12) of said terminal (10), and to assign to said at least one terminal (10) an individual handover bias value depending on said RF receiver quality parameter, wherein said base station (100) is configured to determine said RF receiver quality parameter depending on a connection reestablishment request received from said terminal (10).

2. Base station (100) according to claim 1, wherein said base station (100) is configured to determine said RF receiver quality parameter based on a reestablishment cause value of said connection reestablishment request.

3. Base station (100) according to one of the claims 1 to 2, wherein said base station (100) is configured to determine said RF receiver quality parameter based on whether a user equipment context for said terminal (10) is available at the time said connection reestablishment request is received.

4. Base station (100) according to one of the preceding claims, wherein said base station (100) is configured to determine said RF receiver quality parameter based on information obtained by an external device, preferably another base station (200).

5. Base station (100) according to one of the preceding claims, wherein said base station (100) is configured to transmit said RF receiver quality parameter and/or said individual handover bias value to at least one further device, preferably a further base station (200) .

6. Base station (100) according to one of the preceding claims, wherein said individual handover bias value is lower than a default handover bias value used by default within a cell provided by said base station (100) .

7. Method of operating a base station (100) for a cellular communications network, wherein the base station (100) determines (310) for at least one terminal (10) an RF receiver quality parameter that characterizes a performance of a radio frequency receiver (12) of said terminal (10), and assigns (320) to said at least one terminal (10) an individual handover bias value depending on said RF receiver quality parameter,
wherein said base station (100) determines said RF receiver quality parameter depending on a connection reestablishment request received from said terminal (10).

8. Method according to claim 7, wherein said base station (100) determines said RF receiver quality parameter based on a reestablishment cause value of said connection reestablishment request.

9. Method according to one of the claims 7 to 8, wherein said base station (100) determines said RF receiver quality parameter based on whether a user equipment context for said terminal (10) is available at the time said connection reestablishment request is received.

10. Method according to one of the claims 7 to 9, wherein said base station (100) determines said RF receiver quality parameter based on information obtained by an external device, preferably another base station (200) .

11. Method according to one of the claims 7 to 10, wherein said base station (100) transmits said RF receiver quality parameter and/or said individual handover bias value to at least one further device, preferably a further base station (200).

12. Method according to one of the claims 7 to 11, wherein said individual handover bias value is lower than a default handover bias value used by default within a cell provided by said base station (100).

## Patentansprüche

1. Basisstation (100) für ein zelluläres Kommunikationsnetzwerk, wobei die Basisstation (100) konfiguriert ist zum Bestimmen für mindestens ein Endgerät (10) eines RF-Empfänger-Qualitätsparameters, der eine Leistung eines Radiofrequenzempfängers (12) von besagtem Endgerät (10) kennzeichnet, und zum Zuweisen zu besagtem mindestens einen Endgerät (10) eines individuellen Handover-Bias-Wertes, der von besagtem RF-Empfänger-Qualitätsparameter abhängt, wobei besagte Basisstation (100) konfiguriert ist zum Bestimmen besagten RF-Empfänger-Qualitätsparameters in Abhängigkeit einer Verbindungswiederherstellungsanforderung, die von besagtem Endgerät (10) empfangen worden ist.

2. Basisstation (100) nach Anspruch 1, wobei besagte Basisstation (100) konfiguriert ist zum Bestimmen besagten RF-Empfänger-Qualitätsparameters auf Grundlage eines Wiederherstellungsursachenwerts besagter Verbindungswiederherstellungsanforderung.

3. Basisstation (100) nach einem der Ansprüche 1 bis 2, wobei besagte Basisstation (100) konfiguriert ist zum Bestimmen besagten RF-Empfänger-Qualitätsparameters auf Grundlage davon, ob ein Benutzerendgerätkontext für besagtes Endgerät (10) zur Verfügung steht zum Zeitpunkt, an dem besagte Verbindungswiederherstellungsanforderung empfangen wird.

4. Basisstation (100) nach einem der vorhergehenden Ansprüche, wobei besagte Basisstation (100) konfiguriert ist zum Bestimmen besagten RF-Empfänger-Qualitätsparameters auf Grundlage von Information, die von einem externen Gerät, bevorzugt einer anderen Basisstation (200), erhalten wird.

5. Basisstation (100) nach einem der vorhergehenden Ansprüche, wobei besagte Basisstation (100) konfiguriert ist zum Übertragen besagten RF-Empfänger-Qualitätsparameters und/oder besagten individuellen Handover-Bias-Wertes auf das mindestens eine weitere Gerät, bevorzugt eine andere Basisstation (200).

6. Basisstation (100) nach einem der vorhergehenden Ansprüche, wobei besagter individueller Handover-Bias-Wert niedriger ist als ein voreingestellter Handover-Bias-Wert, der innerhalb einer Zelle als Voreinstellung verwendet wird, die von besagter Basisstation (100) bereitgestellt wird.

7. Verfahren zum Betreiben einer Basisstation (100) für ein zelluläres Kommunikationsnetzwerk, wobei die Basisstation (100) für mindestens ein Endgerät (10) einen RF-Empfänger-Qualitätsparameter bestimmt (310), der eine Leistung eines Radiofrequenzempfängers (12) von besagtem Endgerät (10) kennzeichnet, und besagtem mindestens einen Endgerät (10) einen individuellen Handover-Bias-Wert zuweist (320), der von besagtem RF-Empfänger-Qualitätsparameter abhängt,
wobei besagte Basisstation (100) besagten RF-Empfänger-Qualitätsparameter in Abhängigkeit einer Verbindungswiederherstellungsanforderung bestimmt, die von besagtem Endgerät (10) empfangen worden ist.

8. Verfahren nach Anspruch 7, wobei besagte Basisstation (100) besagten RF-Empfänger-Qualitätsparameter auf Grundlage eines Wiederherstellungsursachenwerts besagter Verbindungswiederherstellungsanforderung bestimmt.

9. Verfahren nach einem der Ansprüche 7 bis 8, wobei besagte Basisstation (100) besagten RF-Empfänger-Qualitätsparameter auf Grundlage davon bestimmt, ob ein Benutzerendgerätkontext für besagtes Endgerät (10) zur Verfügung steht zum Zeitpunkt, an dem besagte Verbindungswiederherstellungsanforderung empfangen wird.

10. Verfahren nach einem der Ansprüche 7 bis 9, wobei besagte Basisstation (100) besagten RF-Empfänger-Qualitätsparameter auf Grundlage von Information bestimmt, die von einem externen Gerät, bevorzugt einer anderen Basisstation (200), erhalten wird.

11. Verfahren nach einem der Ansprüche 7 bis 10, wobei besagte Basisstation (100) besagten RF-Empfänger-Qualitätsparameter und/oder besagten individuellen Handover-Bias-Wert auf das mindestens eine weitere Gerät, bevorzugt eine andere Basisstation (200), überträgt.

12. Verfahren nach einem der Ansprüche 7 bis 11, wobei besagter individueller Handover-Bias-Wert niedriger ist als ein voreingestellter Handover-Bias-Wert, der innerhalb einer Zelle als Voreinstellung verwendet wird, die von besagter Basisstation (100) bereitgestellt wird.

## Revendications

1. Station de base (100) pour un réseau de communications cellulaire, la station de base (100) étant configurée pour déterminer pour au moins un terminal (10) un paramètre de qualité de récepteur RF qui caractérise une performance d'un récepteur radiofréquence (12) dudit terminal (10), et pour assigner audit au moins un terminal (10) une valeur de polarisation de transfert individuelle en fonction dudit paramètre de qualité de récepteur RF,
ladite station de base (100) étant configurée pour déterminer ledit paramètre de qualité de récepteur RF en fonction d'une demande de rétablissement de connexion reçue en provenance dudit terminal (10).

2. Station de base (100) selon la revendication 1, ladite station de base (100) étant configurée pour déterminer ledit paramètre de qualité de récepteur RF sur la base d'une valeur de cause de rétablissement de ladite demande de rétablissement de connexion.

3. Station de base (100) selon l'une des revendications 1 à 2, ladite station de base (100) étant configurée pour déterminer ledit paramètre de qualité de récepteur RF sur la base de si un contexte d'équipement utilisateur pour ledit terminal (10) est disponible au moment où ladite demande de rétablissement de connexion est reçue.

4. Station de base (100) selon l'une des revendications précédentes, ladite station de base (100) étant configurée pour déterminer ledit paramètre de qualité de récepteur RF sur la base d'informations obtenues par un dispositif externe, de préférence une autre station de base (200).

5. Station de base (100) selon l'une des revendications précédentes, ladite station de base (100) étant configurée pour transmettre ledit paramètre de qualité de récepteur RF et/ou ladite valeur de polarisation de transfert individuelle à au moins un dispositif supplémentaire, de préférence une station de base supplémentaire (200).

6. Station de base (100) selon l'une des revendications précédentes, dans laquelle ladite valeur de polarisation de transfert individuelle est inférieure à une valeur de polarisation de transfert par défaut utilisée par défaut à l'intérieur d'une cellule fournie par ladite station de base (100).

7. Procédé d'exploitation d'une station de base (100) pour un réseau de communications cellulaire, dans lequel la station de base (100) détermine (310) pour au moins un terminal (10) un paramètre de qualité de récepteur RF qui caractérise une performance d'un récepteur radiofréquence (12) dudit terminal (10), et assigne (320) audit au moins un terminal (10) une valeur de polarisation de transfert individuelle en fonction dudit paramètre de qualité de récepteur RF,
dans lequel ladite station de base (100) détermine ledit paramètre de qualité de récepteur RF en fonction d'une demande de rétablissement de connexion reçue en provenance dudit terminal (10).

8. Procédé selon la revendication 7, dans lequel ladite station de base (100) détermine ledit paramètre de qualité de récepteur RF sur la base d'une valeur de cause de rétablissement de ladite demande de rétablissement de connexion.

9. Procédé selon l'une des revendications 7 à 8, dans lequel ladite station de base (100) détermine ledit paramètre de qualité de récepteur RF sur la base de si un contexte d'équipement utilisateur pour ledit terminal (10) est disponible au moment où ladite demande de rétablissement de connexion est reçue.

10. Procédé selon l'une des revendications 7 à 9, dans lequel ladite station de base (100) détermine ledit paramètre de qualité de récepteur RF sur la base d'informations obtenues par un dispositif externe, de préférence une autre station de base (200).

11. Procédé selon l'une des revendications 7 à 10, dans lequel ladite station de base (100) transmet ledit paramètre de qualité de récepteur RF et/ou ladite valeur de polarisation de transfert individuelle à au moins un dispositif supplémentaire, de préférence une station de base supplémentaire (200).

12. Procédé selon l'une des revendications 7 à 11, dans lequel ladite valeur de polarisation de transfert individuelle est inférieure à une valeur de polarisation de transfert par défaut utilisée par défaut à l'intérieur d'une cellule fournie par ladite station de base (100).
